# EUROPÄISCHE PATENTSCHRIFT

(11) **EP 1 151 610 B1**
(45) Veröffentlichungstag und Bekanntmachung des Hinweises auf die Patenterteilung: **29.05.2002**
(21) Anmeldenummer: 99964581.5
(22) Anmeldetag: 15.12.1999
(51) Int. Cl.: H04N 7/16, H04H 1/00

(54) **VERFAHREN UND VORRICHTUNG ZUM ERZEUGEN EINES VERSCHLÜSSELTEN NUTZDATENSTROMS UND VERFAHREN UND VORRICHTUNG ZUM ABSPIELEN EINES VERSCHLÜSSELTEN NUTZDATENSTROMS**
METHOD AND DEVICE FOR GENERATING AN ENCODED USEFUL DATA STREAM AND METHOD AND DEVICE FOR PLAYING BACK AN ENCODED USER DATA STREAM
PROCEDE ET DISPOSITIF POUR LA GENERATION D'UN FLUX DE DONNEES UTILES CHIFFRE ET PROCEDE ET DISPOSITIF POUR LA LECTURE D'UN FLUX DE DONNEES UTILES CHIFFRE

(30) Priorität: 16.02.1999 DE 19906449
(43) Veröffentlichungstag der Anmeldung: 07.11.2001
(73) Patentinhaber: Fraunhofer-Gesellschaft zur Förderung der angewandten Forschung e.V., 80636 München (DE)
(72) Erfinder: RUMP, Niels, D-91056 Erlangen (DE); KOLLER, Jürgen, D-91054 Erlangen (DE); BRANDENBURG, Karlheinz, D-91054 Erlangen (DE)
(74) Vertreter: Schoppe, Fritz, Dipl.-Ing.
(86) Internationale Anmeldenummer: EP9909977
(87) Internationale Veröffentlichungsnummer: WO0049762

(56) Entgegenhaltungen:
- EP-A- 0 717 564
- EP-A- 0 755 056
- EP-A- 0 860 823
- EP-A- 0 874 503
- US-A- 5 303 303
- US-A- 5 559 814
- US-A- 5 689 566

## Beschreibung

Die vorliegende Erfindung bezieht sich auf die Ver- bzw. Entschlüsselung von Nutzdaten und insbesondere auf die Handhabung von verschlüsselten Nutzdatenströmen, die einen Anfangsblock und einen Nutzdatenblock aufweisen.

Mit dem Auftreten von Telekommunikationsnetzen und insbesondere aufgrund der großen Verbreitung von Multimediadaten-fähigen Personalcomputern und in letzter Zeit auch von sogenannten Solid-State-Playern, entstand ein Bedarf, digitale Multimediadaten, wie z. B. digitale Audiodaten und/oder digitale Videodaten, kommerziell zu vertreiben. Die Telekommunikationsnetze können beispielsweise analoge Telephonleitungen, digitale Telephonleitungen, wie z. B. ISDN, oder auch das Internet sein. Unter kommerziellen Anbietern von Multimediaprodukten besteht der Bedarf, Multimediadaten zu verkaufen oder auszuleihen, wobei es einem Kunden möglich sein sollte, aus einem bestimmten Katalog zu jeder Zeit individuell ein bestimmtes Produkt auswählen zu können, das dann selbstverständlich nur von dem Kunden, der dafür bezahlt hat, benutzt werden darf.

Im Gegensatz zu bekannten verschlüsselten Fernsehprogrammen, wie z. B. von dem Fernsehkanal Premiere, bei dem die ausgesendeten Daten für alle Benutzer, die gegen eine bestimmte Gebühr eine geeignete Entschlüsselungsvorrichtung erworben haben, gleich verschlüsselt sind, soll die vorliegende Erfindung Verfahren und Vorrichtungen schaffen, die eine individuelle, kundenselektive und sichere Verschlüsselung und Entschlüsselung von Multimediadaten ermöglichen. Im Gegensatz zu den genannten Fernsehkanälen, die ein festes Programm vorgeben, für das sich der Benutzer komplett entscheiden muß, ermöglichen die Verfahren und Vorrichtungen der vorliegenden Erfindung eine maximale Wahlfreiheit des Kunden, d. h. derselbe muß nur für die Produkte bezahlen, die er tatsächlich auch benutzen will.

Die DE 196 25 635 C1 beschreibt Verfahren und Vorrichtungen zum Ver- bzw. Entschlüsseln von Multimediadaten, wobei die Multimediadaten in Form einer verschlüsselten Multimediadatei vorliegen, die einen Bestimmungsdatenblock und einen Nutzdatenblock aufweist. Teile des Bestimmungsdatenblocks sowie zumindest Teile des Nutzdatenblocks werden mit unterschiedlichen Schlüsseln verschlüsselt, wobei insbesondere symmetrische Verschlüsselungsverfahren eingesetzt werden.

Symmetrische Verschlüsselungsverfahren haben einerseits den Vorteil, daß sie relativ schnell arbeiten, andererseits benötigt der Benutzer, der die Datei entschlüsseln will, den gleichen Schlüssel wie der Provider oder Lieferant, z. B. die Deutsche Telekom, der die Multimediadaten verschlüsselt hat, um sie an den Kunden zu verkaufen. Somit haben sowohl der Provider als auch der Benutzer, d. h. der Kunde, einerseits eine Tabelle mit vielen möglichen symmetrischen Verschlüsselungsalgorithmen, wie z. B. DES oder Blowfish, und andererseits eine Tabelle für mögliche Schlüssel, derart, daß vom Provider ein Eintrag in dem Bestimmungsdatenblock der Multimediadaten erzeugt wird, den der Benutzer verwendet, um damit auf seine Schlüsseltabelle zuzugreifen, um den korrekten Schlüssel zum Entschlüsseln auszuwählen.

Aufgrund der stark zunehmenden Verbreitung des MP3-Standards sind auf dem Markt sogenannten Solid-State-Player erschienen, die zum Entschlüsseln und Abspielen von Multimediadaten eingesetzt werden sollen. Diese Geräte sollen sehr preisgünstig sein und dürfen daher lediglich eine begrenzte Menge an Speicherplatz und Rechenleistung haben. Im Gegensatz zu Personalcomputern, bei denen die vorhandenen Ressourcen die für die Entschlüsselung von Multimediadaten benötigten Ressourcen bei weitem übersteigen, müssen Solid-State-Player oder Stereoanlagen oder Auto-HiFi-Geräte, damit sie sich auf dem hart umkämpften Markt durchsetzen können, preiswert sein. Dazu ist es erforderlich, diese Geräte beim Entschlüsseln und Abspielen der entschlüsselten Multimediadaten soweit als möglich bezüglich Rechenleistung und Speicherplatz zu entlasten.

Nachteilig an dem in der DE 196 25 635 C1 beschriebenen Verbzw. Entschlüsselungskonzept ist die Tatsache, daß der gesamte Bestimmungsdatenblock vollständig verarbeitet werden muß, bevor mit dem Entschlüsseln des Nutzdatenblocks, dem Decodieren des entschlüsselten Nutzdatenblocks und schließlich dem Abspielen des entschlüsselten decodierten Nutzdatenblocks begonnen werden kann.

Dies wird besonders dann zum Problem, wenn die Verarbeitung des Bestimmungsdatenblocks in einer Entschlüsselungsvorrichtung aufwendigere Rechenoperationen mit sich bringt, wie beispielsweise die Berechnung einer Hash-Summe oder eines Fingerabdrucks des Anfangsblocks. Die Situation könnte noch dadurch verschärft werden, wenn die Entschlüsselungsvorrichtung über begrenzte Speicher- und Prozessorressourcen verfügt. Abspielgeräte insbesondere in Form eines Solid-State-Players sollen jedoch gerade begrenzte Speicher- und Prozessorressourcen haben, um preiswert auf dem Markt angeboten werden zu können.

Ein weiterer Nachteil des bekannten Ver- bzw. Entschlüsselungskonzepts ist die Tatsache, daß nicht ohne weiteres eine einfache Preview- bzw. Prelisten-Funktion möglich ist. Wenn es sich bei den Multimediadaten um Videodaten handelt, so ist es in bestimmten Fällen wünschenswert, die ersten beispielsweise 10 bis 20 Sekunden anzuschauen, um einerseits überhaupt erst eine Entscheidung zu treffen, das angebotene Stück zu kaufen, oder um andererseits ein bestimmtes Stück ohne weiteres identifizieren zu können. Handelt es sich bei den Multimediadaten um Audiodaten, so besteht der Bedarf, in ein Stück "reinzuhören", d. h. die ersten vielleicht 10 bis 20 Sekunden anzuhören, um dann zu entscheiden, ob das Stück gekauft werden soll, bzw. um das Stück zu identifizieren.

Die Aufgabe der vorliegenden Erfindung besteht darin, ein Konzept zum Erzeugen bzw. Abspielen von verschlüsselten Multimediadatenströmen zu schaffen, das mit mäßigen Speicher- und Prozessorressourcen auskommt und zugleich eine effiziente Implementation einer Preview- bzw. Prelisten-Funktion gestattet.

Diese Aufgabe wird durch ein Verfahren zum Erzeugen eines verschlüsselten Nutzdatenstroms nach Patentanspruch 1, durch ein Verfahren zum Abspielen eines verschlüsselten Nutzdatenstroms nach Patentanspruch 6, durch eine Vorrichtung zum Erzeugen eines verschlüsselten Nutzdatenstroms nach Patentanspruch 12 und durch eine Vorrichtung zum Abspielen eines verschlüsselten Nutzdatenstroms nach Patentanspruch 13 gelöst.

Der vorliegenden Erfindung liegt die Erkenntnis zugrunde, daß das Konzept verworfen werden muß, daß die Nutzdaten unmittelbar von Anfang an verschlüsselt werden. Im Stand der Technik bestand die Bestrebung immer, die Nutzdaten von Anfang an zu verschlüsseln, um das gesamte Nutzdatenstück und insbesondere den Anfang desselben vor unautorisierten Zugriffen zu schützen.

An dieser Stelle sei darauf hingewiesen, daß Nutzdaten allgemein Multimediadaten, d. h. Audiodaten, Videodaten oder eine Kombination aus Audiodaten und Videodaten, aber auch z. B. Textdaten umfassen. Im nachfolgenden wird der Gegenstand der vorliegenden Erfindung aus zweckmäßigkeitsgünden jedoch anhand von Multimediadaten dargelegt. Es ist jedoch offensichtlich, daß sämtliche Nutzdaten, für die es ein Verschlüsselungsinteresse gibt, durch die erfindungsgemäßen Vorrichtungen und Verfahren verarbeitet werden können.

Es wurde jedoch herausgefunden, daß insbesondere dann, wenn die Verarbeitung des Anfangsblocks komplexere Operationen, wie z. B. das Bilden von Hash-Summen, umfaßt, die Verzögerung, die durch die Verarbeitung des Anfangsblocks entsteht, signifikant werden kann, was insbesondere dann der Fall ist, wenn Abspielvorrichtungen mit begrenzten Speicher- und Prozessorressourcen verwendet werden sollen.

Ferner wurde herausgefunden, daß die Auslastung eines Prozessors mit begrenzter Prozessorleistung beim Verarbeiten des Anfangsblocks besonders hoch ist, während dieselbe beim Entschlüsseln, Decodieren und Abspielen der entschlüsselten decodierten Multimediadaten geringer ist. Dies bedeuet, daß lediglich für die Verarbeitung des Anfangsblocks relativ viel Prozessorleistung zur Verfügung gestellt werden muß, die dann beim Entschlüsseln, Decodieren und Abspielen des Datenstroms nicht mehr voll ausgenützt wird. Es sei darauf hingewiesen, daß die Sicherheit eines verschlüsselten Multimediadatenstroms im wesentlichen durch den Anfangsblock bestimmt wird, d. h., daß es immer sinnvoll ist, genau dort relativ viel Rechenleistung einzusetzen, um sichere Konzepte zu erhalten. Daher ist es nicht wünschenswert, die Verarbeitung des Anfangsblocks generell zu vereinfachen, um die Verzögerung des Verarbeitung des Anfangsblocks zu reduzieren.

Gemäß der vorliegenden Erfindung wird daher ein bestimmter Abschnitt, der am Beginn der zu verschlüsselnden Multimediadaten, d. h. am Beginn eines Nutzdatenblocks, startet und nach einer vorbestimmten Dauer der zu verschlüsselnden Multimediadaten endet, d. h. ein erster Teil der zu verschlüsselnden Multimediadaten, nicht verschlüsselt wird, sondern unverschlüsselt in einen Anfangsabschnitt des Nutzdatenblocks der verschlüsselten Multimediadatei geschrieben wird. Erst die Multimediadaten, die dem ersten Teil folgen, werden auf eine geeignete Art und Weise verschlüsselt und an den Anfangsabschnitt des Nutzdatenblocks angehängt. Dies bedeutet, daß der erste Teil eines Multimediadatenstücks, der sich üblicherweise in einem Bereich von 5 bis 20 Sekunden befinden dürfte, frei zugänglich ist. Um diesen ersten Teil abzuspielen, sind die Prozessoranforderungen minimal, da keine Hash-Summen berechnet werden müssen, und da kein verschlüsselter Multimediadatenschlüssel entschlüsselt werden muß usw. Außerdem ist es in diesem Stadium nicht unbedingt erforderlich, ausgefeilte Lizenzdaten, die sich auf die erlaubte Verwendung des Multimediadatenstroms beziehen, zu verarbeiten. Ein Abspielgerät wird daher den ersten Teil der Multimediadaten ohne nennenswerte Verzögerung abspielen können. Damit ist bereits auf einfache und effiziente Art und Weise eine effektive Preview- bzw. Prelisten-Funktion möglich.

Das Bereitstellen eines unverschlüsselten Anfangsabschnitts des Nutzdatenblocks bringt jedoch weitere erhebliche Vorteile mit sich, wenn die Entschlüsselungsvorrichtungen über begrenzte Speicher- und Prozessorressourcen verfügen, was insbesondere bei Solid-State-Playern der Fall ist, die möglichst preiswert auf dem Markt angeboten werden müssen. Wenn zu verschlüsselnde Multimediadaten beispielsweise durch irgendein MPEG-Verfahren codiert sind, so muß ein Abspielgerät, um den Anfangsabschnitt des Nutzdatenblocks abspielen zu können, die Multimediadaten lediglich decodieren und dann abspielen. Das Abspielgerät hat daher während des Decodierens und Abspielens noch freie Prozessorressourcen, um während des Abspielens des Anfangsabschnitts des Nutzdatenblocks, der unverschlüsselt ist, den Anfangsblock selbst vollständig zu verarbeiten, um den dann folgenden verschlüsselten Teil des Nutzdatenblocks zu entschlüsseln, zu decodieren und abzuspielen.

Die erfindungsgemäße Bereitstellung eines unverschlüsselten Anfangsabschnitts des Nutzdatenblocks ermöglicht daher eine Verteilung von benötigten Speicher- und Prozessorressourcen, derart, daß auch mit Abspielgeräten mit begrenzten Ressourcen ein Entschlüsseln, Decodieren und Abspielen von Multimediadaten ohne außerordentlich hohe Verzögerung erreicht wird.

Bevorzugte Ausführungsbeispiele der vorliegenden Erfindung werden nachfolgend bezugnehmend auf die beiliegenden Zeichnungen detailliert erläutert. Es zeigen:
- Fig. 1: einen Multimediadaten-Strom, der gemäß der vorliegenden Erfindung erzeugt werden kann;
- Fig. 2: eine detailliertere Darstellung des Anfangsblocks und des Nutzdatenblocks des verschlüsselten Multimediadatenstroms;
- Fig. 3: eine Auswahl bestimmter Einträge in die einzelnen Unterblöcke des Anfangsblocks;
- Fig. 4: ein Flußdiagramm des erfindungsgemäßen Verfahrens zum Erzeugen eines verschlüsselten Multimediadatenstroms; und
- Fig. 5: ein Flußdiagramm des erfindungsgemäßen Verfahrens zum Abspielen eines verschlüsselten Multimediadatenstroms.

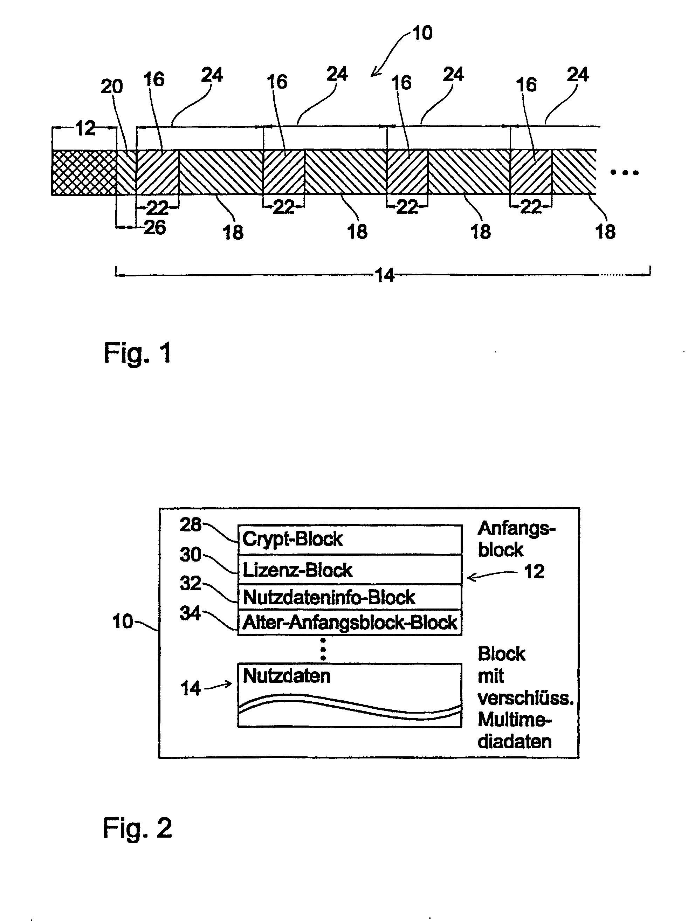

Fig. 1 zeigt einen verschlüsselten Multimediadatenstrom 10, der einen Anfangsblock oder Header 12 und einen Nutzdatenblock 14, d. h. einen Block mit verschlüsselten Multimediadaten, aufweist. Der Nutzdatenblock 14 umfaßt verschlüsselte Abschnitte 16 und unverschlüsselte Abschnitte 18 zwischen den verschlüsselten Abschnitten 16. Außerdem umfaßt ein Multimediadatenstrom, der gemäß der vorliegenden Erfindung erzeugt werden kann, einen weiteren unverschlüsselten Abschnitt 20, der auf den Anfangsblock 12 folgt und vor einem verschlüsselten Abschnitt 16 angeordnet ist.

Üblicherweise sind die zu verschlüsselten Multimediadaten auf irgendeine Art und Weise codiert, wie z. B. nach einem MPEG-Standard, wie z. B. MPEG-2 AAC, MPEG-4 AAC oder MPEG Layer-3. Daher ist es ausreichend, gewisse Abschnitte der zu verschlüsselten Multimediadaten zu verschlüsseln. Dies führt zu einem wesentlich verringerten Verarbeitungsaufwand sowohl beim Provider, der die Daten verschlüsselt, als auch beim Kunden, der die Daten wieder entschlüsseln muß. Außerdem wird durch die lediglich teilweise Verschlüsselung der Multimediadaten der Hörgenuß bzw. der Sehgenuß eines Benutzers, der lediglich die unverschlüsselten Multimediadaten verwendet, durch die ständig auftretenden verschlüsselten Blöcke stark beeinträchtigt.

Obwohl Fig. 1 einen verschlüsselten Multimediadatenstrom zeigt, bei dem der Anfangsblock 12 am Anfang des verschlüsselten Multimediadatenstroms angeordnet ist, soll sich diese Anordnung von Anfangsblock und Nutzdatenblock nicht auf die Übertragung des verschlüsselten Multimediadatenstroms beziehen. Der Ausdruck "Anfangsblock" soll lediglich zum Ausdruck bringen, daß eine Entschlüsselungsvorrichtung, die den verschlüsselten Multimediadatenstrom entschlüsseln möchte, zunächst zumindest Teile des Anfangsblocks benötigt, bevor die Multimediadaten selbst entschlüsselt werden können. Je nach Übertragungsmedium könnte der Anfangsblock irgendwo auch innerhalb des Nutzdatenblocks angeordnet sein bzw. durchaus nach bestimmten Teilen des Nutzdatenblocks empfangen werden, wenn beispielsweise an eine Paket-orientierte Übertragung des Multimediadatenstroms gedacht wird, bei der unterschiedliche Pakete, von denen eines den Anfangsblock enthalten kann und ein anderes einen Teil des Nutzdatenblocks enthalten kann, über unterschiedliche physische Übertragungswege übertragen werden, derart, daß die Empfangsreihenfolge ganz und gar nicht der Sendereihenfolge entsprechen muß. Eine Entschlüsselungsvorrichtung muß in diesem Fall jedoch in der Lage sein, die empfangenen Pakete zu speichern und wieder zu ordnen, derart, daß Informationen aus dem Anfangsblock extrahiert werden, um mit dem Entschlüsseln zu beginnen. Der verschlüsselte Multimediadatenstrom könnte ferner in Form einer Datei vorliegen oder aber auch in Form eines tatsächlichen Datenstroms, wenn beispielsweise an eine Live-Übertragung eines Multimediaereignisses gedacht wird. Diese Anwendung wird insbesondere beim digitalen Benutzer-selektiven Rundfunk auftreten.

Die Länge eines verschlüsselten Abschnitts 16 wird durch einen Wert Menge 22 dargestellt, während der Abstand im verschlüsselten Multimediadatenstrom von dem Beginn eines verschlüsselten Abschnitts 16 bis zum Beginn des nächsten verschlüsselten Abschnitts 16 mit Schritt 24 bezeichnet wird. Die Länge des weiteren verschlüsselten Abschnitts 20 wird durch einen Wert Erster Schritt 26 angegeben.

Diese Werte 22, 24 und 26 werden selbstverständlich für ein korrektes Entschlüsseln der Multimediadaten in einer Entschlüsselungsvorrichtung benötigt, weshalb dieselben in den Anfangsblock 12 eingetragen werden müssen, wie es später erläutert wird.

Es ist jedoch zu bemerken, daß das Größenverhältnis der Werte 22 und 24 variabel sein kann. Dieses schließt auch ein, daß der unverschlüsselte Bereich 18 die Länge Null aufweist, daß also eine vollständige Verschlüsselung vorgenommen wird

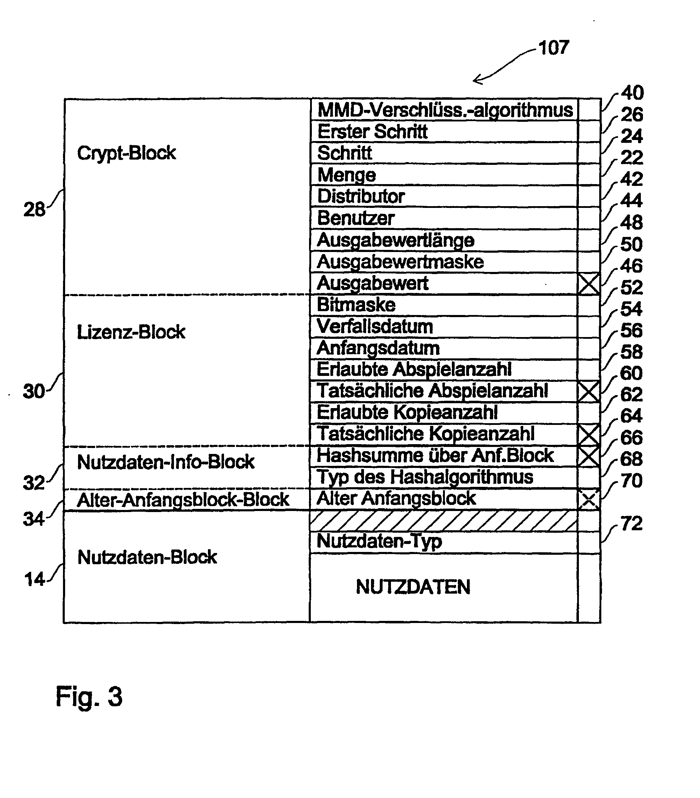

Fig. 2 zeigt eine detailliertere Darstellung des verschlüsselten Multimediadatenstroms 10, der aus dem Anfangsblock 12 und dem Nutzdatenblock 14 besteht. Der Anfangsblock 12 ist in mehrere Unterblöcke unterteilt, die im einzelnen insbesondere bezugnehmend auf Fig. 3 erläutert werden. Es sei darauf hingewiesen, daß die Anzahl und Funktion der Unterblöcke beliebig erweitert werden kann. In Fig. 2 sind daher lediglich beispielhaft einzelne Unterblöcke des Anfangsblocks 12 aufgeführt. Derselbe umfaßt, wie es in Fig. 2 gezeigt ist, einen sogenannten Crypt-Block 29, der allgemein gesagt für das Verschlüsseln der Multimediadaten relevante Informationen aufweist. Weiterhin umfaßt der Anfangsblock 12 einen sogenannten Lizenz-Block 30, der Daten aufweist, die sich auf die Art und Weise beziehen, wie ein Benutzer den verschlüsselten Multimediadatenstrom verwenden kann bzw. darf. Der Anfangsblock 12 umfaßt ferner einen Nutzdateninfo-Block 32, der Informationen bezüglich des Nutzdatenblocks 14 sowie generelle Informationen über den Anfangsblock 12 selbst umfassen kann. Weiterhin kann der Anfangsblock 12 einen Alter-Anfangsblock-Block 34 aufweisen, der eine sogenannte rekursive Anfangsblock-Struktur ermöglicht. Dieser Block versetzt den Benutzer, der neben einer Entschlüsselungsvorrichtung auch eine Verschlüsselungsvorrichtung hat, in die Lage, einen verschlüsselten Multimediadatenstrom für andere in seinem Besitz befindliche Abspielgeräte umzuformatieren, ohne die ursprünglichen vom Distributor gelieferten Anfangsblockinformationen zu verlieren bzw. zu modifizieren. Je nach Anwendungsbereich können noch weitere Unterblöcke, wie z. B. ein IP-Information-Block (IP = Intellectual Property = Geistiges Eigentum) nach ISO/IEC 14496-1, MPEG-4, Systems, 1998, der Urheberrechtsinformationen umfaßt, zu dem Anfangsblock 12 hinzugefügt werden.

Wie es in der Technik üblich ist, kann jedem Block eine interne Blockstruktur zugewiesen werden, die zunächst einen Blockidentifikator fordert, die dann die Länge des Unterblocks umfaßt, und die dann schließlich die Block-Nutzdaten selbst aufführt. Damit erhält der verschlüsselte Multimediadatenstrom und insbesondere der Anfangsblock des verschlüsselten Multimediadatenstroms einer erhöhte Flexibilität, derart, daß auf neue Anforderungen insoweit reagiert werden kann, daß zusätzliche Unterblöcke hinzugefügt werden bzw. bestehende Unterblöcke weggelassen werden können.

Fig. 3 gibt eine Übersicht über die Block-Nutzdaten der einzelnen in Fig. 2 dargestellten Unterblöcke.

Zunächst wird auf den Crypt-Block 28 eingegangen. Derselbe enthält einen Eintrag für einen Multimediadaten-Verschlüsselungsalgorithmus 40, der den bei einem bevorzugten Ausführungsbeispiel verwendeten symmetrischen Verschlüsselungsalgorithmus identifiziert, der beim Verschlüsseln der Multimediadaten verwendet worden ist. Der Eintrag 40 dürfte ein Index für eine Tabelle sein, derart, daß eine Entschlüsselungsvorrichtung nach Lesen des Eintrags 40 in der Lage ist, denselben Verschlüsselungsalgorithmus aus einer Vielzahl von Verschlüsselungsalgorithmen auszuwählen, den die Verschlüsselungsvorrichtung verwendet hat. Der Crypt-Block 28 umfaßt ferner den Eintrag Erster Schritt 26, den Eintrag Schritt 24 und den Eintrag Menge 22, die bereits in Verbindung mit Fig. 1 dargestellt worden sind. Diese Einträge in dem Anfangsblock versetzen eine Entschlüsselungsvorrichtung in die Lage, einen verschlüsselten Multimediadatenstrom entsprechend unterzugliedern, um eine korrekte Entschlüsselung durchführen zu können.

Der Crypt-Block 28 enthält ferner einen Eintrag für den Distributor bzw. Provider bzw. Lieferanten 42, der ein Code für den Distributor ist, der den verschlüsselten Multimediadatenstrom erzeugt hat. Ein Eintrag Benutzer 44 identifiziert den Benutzer, der von dem Distributor, der durch den Eintrag 42 identifiziert ist, den verschlüsselten Multimediadatenstrom auf irgendeine Art und Weise erhalten hat. Eine mögliche Verwendung dieser Kennungen ist es, die Benutzerkennung gerätespezifisch durchzuführen. Der Eintrag Benutzer würde dann die Seriennummer eines PC, eines Laptops, eines Auto-HiFi-Geräts, einer Heim-Stereoanlage etc. umfassen, die ein Abspielen nur auf dem speziellen Gerät zuläßt. Zur weiteren Erhöhung der Flexibilität und/oder Sicherheit könnte statt der Seriennummer, die bei jedem Hersteller unterschiedlich aussieht, die aber zufällig identisch sein könnten, eine spezielle Kennung, wie z. B. eine logische Verknüpfung der Festplattengröße mit der Prozessornummer etc. beim Beispiel eines PC, eingesetzt werden.

Ein Eintrag 46 enthält einen Ausgabewert, auf den später detailliert eingegangen wird. Dieser Ausgabewert stellt allgemein gesagt eine verschlüsselte Version des Multimediadaten-Schlüssels dar, der in Verbindung mit dem durch den Eintrag 40 identifizierten Multimediadaten-Verschlüsselungsalgorithmus benötigt wird, um die in dem Nutzdatenblock 14 vorhandenen verschlüsselten Multimediadaten (Abschnitte 16 von Fig. 1) korrekt zu entschlüsseln. Um eine ausreichende Flexibilität für zukünftige Anwendungen zu haben, sind ferner die beiden Einträge Ausgabewertlänge 48 und Ausgabewertmaske 50 vorgesehen. Der Eintrag Ausgabewertlänge 48 gibt an, welche Länge der Ausgabewert 46 tatsächlich hat. Um ein flexibles Anfangsblockformat zu erhalten, sind jedoch in dem Anfangsblockformat für den Ausgabewert mehr Byte vorgesehen als ein Ausgabewert derzeit tatsächlich hat. Die Ausgabewertmaske 50 gibt daher an, wie ein kürzerer Ausgabewert auf einen längeren Ausgabewertplatz gewissermaßen verteilt wird. Ist die Ausgabewertlänge beispielsweise halb so groß wie der verfügbare Platz für den Ausgabewert, so könnte die Ausgabewertmaske derart gestaltet sein, daß die erste Hälfte der Ausgabewertmaske gesetzt ist, während die zweite Hälfte abgedeckt ist. Dann würde der Ausgabewert einfach in den von der Syntax für den Anfangsblock vorgesehenen Raum eingetragen werden und die erste Hälfte einnehmen, während die andere Hälfte aufgrund der Ausgabewertmaske 50 ignoriert wird.

Im nachfolgenden wird auf den Lizenz-Block 30 des Anfangsblocks 12 eingegangen. Derselbe umfaßt einen Eintrag Bitmaske 52. Dieser Eintrag kann bestimmte spezielle Informationen für das Abspielen bzw. für die generelle Art der Verwendung der verschlüsselten Multimediadaten haben. Insbesondere könnte hiermit einer Entschlüsselungsvorrichtung mitgeteilt werden, ob bzw. ob nicht die Nutzdaten lokal abgespielt werden können. Weiterhin könnte hier signalisiert werden, ob das Herausforderungs-Antwort-Verfahren zum Verschlüsseln eingesetzt worden ist, das in dem eingangs erwähnten Deutschen Patent DE 196 25 635 C1 beschrieben ist und einen effizienten Datenbankzugriff ermöglicht.

Ein Eintrag Verfallsdatum 54 gibt den Zeitpunkt an, zu dem die Erlaubnis, den verschlüsselten Multimediadatenstrom zu entschlüsseln, erlischt. Eine Entschlüsselungsvorrichtung wird in diesem Fall den Eintrag Verfallsdatum 54 prüfen und mit einer eingebauten Zeitmeßeinrichtung vergleichen, um im Falle, daß das Verfallsdatum bereits überschritten ist, keine Entschlüsselung des verschlüsselten Multimediadatenstroms mehr durchzuführen. Dies erlaubt es einem Provider, auch zeitlich begrenzt verschlüsselte Multimediadaten zur Verfügung zu stellen, was den Vorteil einer wesentlich flexibleren Handhabung und auch Preisgestaltung ermöglicht. Diese Flexibilität wird weiter durch einen Eintrag Anfangsdatum 56 unterstützt, in dem spezifiziert ist, ab wann eine verschlüsselte Multimediadatei entschlüsselt werden darf. Eine Verschlüsselungsvorrichtung wird den Eintrag Anfangsdatum mit ihrer eingebauten Uhr vergleichen, um erst dann eine Entschlüsselung der verschlüsselten Multimediadaten durchzuführen, wenn der aktuelle Zeitpunkt später als das Anfangsdatum 56 ist.

Ein Eintrag Erlaubte Abspielanzahl 58 gibt an, wie oft der verschlüsselte Multimediadatenstrom entschlüsselt, d. h. abgespielt werden darf. Dies erhöht weiter die Flexibilität des Providers, derart, daß er nur eine bestimmte Anzahl des Abspielens beispielsweise gegen eine bestimmte Summe zuläßt, die kleiner ist als eine Summe, die für die unbeschränkte Nutzung des verschlüsselten Multimediadatenstroms anfallen würde.

Zur Verifizierung bzw. Unterstützung des Eintrags Erlaubte Abspielanzahl 58 umfaßt der Lizenz-Block 30 ferner einen Eintrag Tatsächliche Abspielanzahl 60, der nach jedem Entschlüsseln des verschlüsselten Multimediadatenstroms beispielsweise um Eins inkrementiert werden könnte. Eine Entschlüsselungsvorrichtung wird daher immer überprüfen, ob der Eintrag Tatsächliche Abspielanzahl kleiner als der Eintrag Erlaubte Abspielanzahl ist. Wenn dies der Fall ist, wird eine Entschlüsselung der Multimediadaten durchgeführt. Wenn dies nicht der Fall ist, wird keine Entschlüsselung mehr ausgeführt.

Analog zu den Einträgen 58 und 60 sind die Einträge Erlaubte Kopieanzahl 62 und Tatsächliche Kopieanzahl 64 implementiert. Durch die beiden Einträge 62 und 64 wird sichergestellt, daß ein Benutzer der Multimediadaten dieselben lediglich so oft kopiert, wie es ihm vom Provider erlaubt wird, bzw. so oft, wie er beim Kauf der Multimediadaten bezahlt hat. Durch die Einträge 58 bis 64 wird ein effektiver Urheberrechtsschutz sichergestellt, und kann eine Selektion zwischen privaten Nutzern und gewerblichen Nutzern erreicht werden, beispielsweise, indem die Einträge Erlaubte Abspielanzahl 58 und Erlaubte Kopieanzahl 62 auf einen kleinen Wert eingestellt werden.

Die Lizenzierung könnte z. B. so gestaltet sein, daß eine bestimmte Anzahl von Kopien (Eintrag 62) des Originals erlaubt ist, während keine Kopien einer Kopie zulässig sind. Der Anfangsblock einer Kopie würde dann im Gegensatz zum Anfangsblock des Originals als Eintrag Erlaubte Kopieanzahl eine Null haben, derart, daß diese Kopie von einer ordnungsgemäßen Ver/Entschlüsselungsvorrichtung nicht mehr kopiert wird.

Bei dem hier gezeigten Beispiel für ein Multimediadatenschutzprotokoll (MMP; MMP = Multimedia Protection Protcol) enthält der Anfangsblock 12 ferner einen Nutzdaten-Informationsblock 32, der hier lediglich zwei Block-Nutzdateneinträge 66 und 68 hat, wobei der Eintrag 66 eine Hash-Summe über den gesamten Anfangsblock enthält, während der Eintrag 68 den Typ des Hash-Algorithmus identifiziert, der zum Bilden der Hash-Summe über den gesamten Anfangsblock verwendet worden ist.

In diesem Zusammenhang sei beispielsweise auf das Fachbuch "Applied Cryptography", Second Edition, John Wiley & Sons, Inc. von Bruce Schneier (ISBN 0 471-11709-9) verwiesen, das eine ausführliche Darstellung symmetrischer Verschlüsselungsalgorithmen, asymmetrischer Verschlüsselungsalgorithmen und Hash-Algorithmen umfaßt.

Der Anfangsblock 12 umfaßt schließlich den Alter-Anfangsblock-Block 34, der neben den Synchronisationsinformationen, die in Fig. 3 nicht dargestellt sind, den Eintrag Alter Anfangsblock 70 aufweist. In den Eintrag Alter-Anfangsblock 70 kann, wenn ein Benutzer selbst eine Verschlüsselung durchführt und somit einen neuen Anfangsblock 12 erzeugt, der alte Anfangsblock vom Provider bewahrt werden, um keine wesentlichen Informationen zu verlieren, die der Provider in den Anfangsblock eingetragen hat. Dazu könnten beispielsweise Urheberinformationen (IP-Information-Block) frühere Benutzerinformationen und Distributoreninformationen zählen, die eine Zurückverfolgung einer Multimediadatei, die beispielsweise mehrmals von unterschiedlichen Geräten ent-/ver-schlüsselt worden ist, auf den ursprünglichen Anbieter transparent ermöglichen, wobei Urheberinformationen bewahrt werden. Damit ist es möglich, jederzeit zu überprüfen, ob eine verschlüsselte Multimediadatei legal oder illegal erworben worden ist.

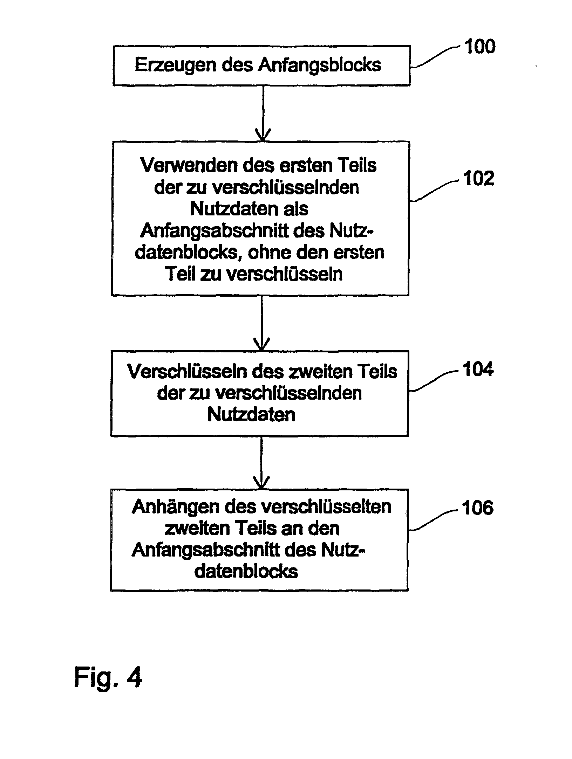

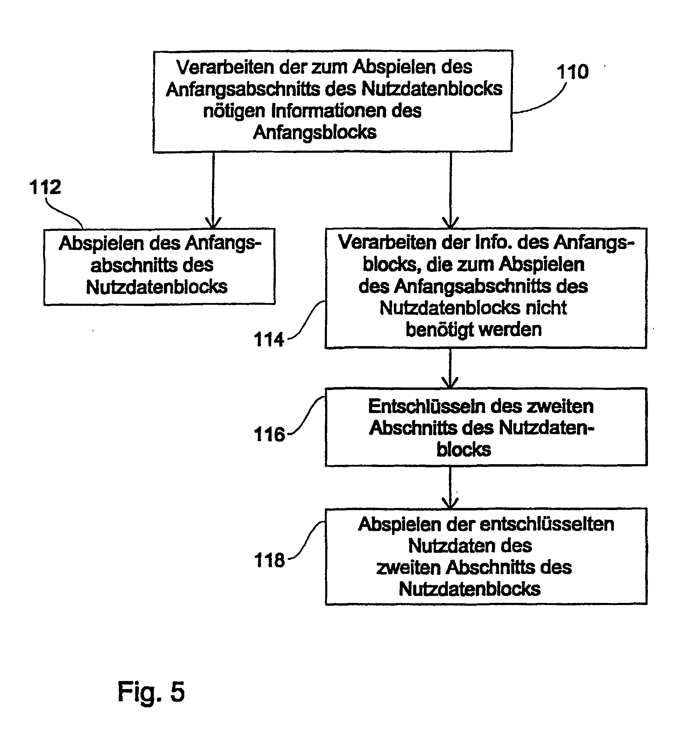

Es ist offensichtlich, daß die Reihenfolge der in Fig. 5 genannten Schritte ebenso variiert werden kann, wie es auch bezugnehmend auf Fig. 4 erläutert worden ist.

Fig. 4 zeigt ein Flußdiagramm des erfindungsgemäßen Verfahrens zum Erzeugen eines verschlüsselten Multimediadatenstroms. In einem Schritt 100 wird der Anfangsblock 12 erzeugt. Daran anschließend wird in einem Schritt 102 der erste Teil der zu verschlüsselnden Multimediadaten als Anfangsabschnitt des Nutzdatenblocks 14 verwendet, jedoch ohne diesen ersten Teil zu verschlüsseln. Der Anfangsabschnitt bildet daher den weiteren unverschlüsselten Abschnitt 20 von Fig. 1, dessen Länge durch den Eintrag Erster Schritt 26 in dem Anfangsblock spezifiziert ist. Daran anschließend wird der zweite Teil der zu verschlüsselnden Multimediadaten in einem Schritt 104 verschlüsselt, um den auf den weiteren unverschlüsselten Abschnitt 20 folgenden verschlüsselten Abschnitt 16 (Fig. 1) zu erzeugen. Um einen einfachen verschlüsselten Multimediadatenstrom fertigzustellen, wird der verschlüsselte zweite Teil an den Anfangsabschnitt des Nutzdatenblocks angehängt (Schritt 106), derart, daß der verschlüsselte Multimediadatenstrom 10 den Anfangsblock 12, den Anfangsabschnitt 20 und den verschlüsselten zweiten Teil 16 aufweist. Der verschlüsselte Multimediadatenstrom kann nun beliebig fortgesetzt werden, indem wieder ein unverschlüsselter Abschnitt 18, ein verschlüsselter Abschnitt 16 etc. generiert und in den Nutzdatenblock 14 geschrieben wird.

Aus Fig. 4 ist ersichtlich, daß die Reihenfolge der Schritte 100 bis 106 nicht zwingend festgelegt ist. Der Anfangsblock könnte auch erst nach der Fertigstellung des Nutzdatenblocks erzeugt werden und mittels eines Blockmultiplexers an den Beginn des Nutzdatenblocks gestellt werden. Alternativ könnte der zweite Teil der zu verschlüsselnden Multimediadaten. verschlüsselt werden (Schritt 104), bevor der erste Teil in den Datenblock geschrieben worden ist. Der Eintrag Erster Schritt 26 definiert nämlich genau den Punkt, d. h. die Bitstelle, des Nutzdatenblocks 14, an dem mit dem Eintragen des verschlüsselten zweiten Teils begonnen werden muß. Wesentlich ist daher lediglich, daß der unverschlüsselte Anfangsabschnitt 20 des Nutzdatenblocks 14 unmittelbar hinter den Anfangsblock 12 gestellt wird. An dieser Stelle sei noch einmal darauf hingewiesen, daß die hier beschriebene Reihenfolge Anfangsblock, unverschlüsselter Anfangsabschnitt und verschlüsselter zweiter Teil (d. h. 12, 20, 16) lediglich die Reihenfolge beschreibt, in der der Multimediadatenstrom im Abspielgerät angeordnet werden muß, damit sich die erfindungsgemäßen Vorteile ergeben. Diese Reihenfolge hat keine Auswirkung auf die Übertragung des verschlüsselten Multimediadatenstroms. Dies wird besonders dort offensichtlich, wo eine paketorientierte Datenübertragung eingesetzt wird. Ein Paket für den Anfangsblock, ein Paket für den Anfangsabschnitt und ein Paket für den verschlüsselten zweiten Teil könnten über unterschiedliche Wege von einem Sender zu einem Empfänger übermittelt werden, derart, daß zuerst der Anfangsabschnitt und dann der verschlüsselte zweite Teil und schließlich der Anfangsblock eintreffen. Das Abspielgerät muß in diesem Fall jedoch in der Lage sein, die drei Pakete wieder entsprechend anzuordnen, wie es beschrieben worden ist.

Fig. 5 zeigt ein Flußdiagramm des erfindungsgemäßen Verfahrens zum Abspielen des verschlüsselten Multimediadatenstroms 10, der den Anfangsblock 12, den unverschlüsselten Anfangsabschnitt 20 des Nutzdatenblocks 14 und den verschlüsselten zweiten Teil 16 des Nutzdatenblocks 14 aufweist. Erfindungsgemäß werden im Abspielgerät zunächst lediglich die Informationen des Anfangsblocks 12 verarbeitet, die zum Abspielen des unverschlüsselten Anfangsabschnitts des Nutzdatenblocks 14 unbedingt erforderlich sind (Schritt 110).

Anschließend kann bereits mit minimaler Verzögerung der unverschlüsselte Anfangsabschnitt 20 des Nutzdatenblocks 14 abgespielt werden (Schritt 112). Damit ist eine einfache und effiziente Preview- bzw. Prelisten-Funktion implementiert. Üblicherweise wird das Abspielen des Anfangsabschnitts des Nutzdatenblocks (Schritt 112) nicht die volle Prozessorleistung des Abspielgeräts in Anspruch nehmen. Das Abspielgerät kann daher im wesentlichen parallel zum Abspielen des Anfangsabschnitts die anderen Informationen des Anfangsblocks 12 verarbeiten, d. h. die Informationen, die zum Abspielen des Anfangsabschnitts des Nutzdatenblocks nicht benötigt werden (Schritt 114). Das Abspielgerät wird dann, wenn der Anfangsblock 12 verarbeitet ist, die verschlüsselten Multimediadaten im ersten verschlüsselten Abschnitt 16, d. h. dem verschlüsselten zweiten Teil des Nutzdatenblocks 14, entschlüsseln können (Schritt 116), um schließlich die entschlüsselten Multimediadaten des zweiten Abschnitts abspielen zu können (Schritt 118).

Bezugnehmend auf Fig. 3 wird im nachfolgenden auf die Informationen eingegangen, die zum Abspielen des unverschlüsselten Anfangsabschnitts 20 unbedingt erforderlich sind. Unbedingt erforderliche Informationen sind zum einen die in Fig. 3 nicht dargestellten allgemeinen Blockidentifikationsinformationen und Blocklängeninformationen, damit ein Abspielgerät die richtige Stelle des Anfangsblocks ermittelt, wo nötige Informationen stehen. Sind die Multimediadaten, wie es üblicherweise der Fall ist, auf irgendeine Art und Weise beispielsweise nach einem MPEG-Verfahren codiert, so wird das Abspielgerät im Schritt 110 (Fig. 5) diese Informationen aus dem Anfangsblock 12 extrahieren müssen. In der Tabelle in Fig. 3 stehen diese Informationen im Eintrag Nutzdaten-Typ des Nutzdaten-Blocks 14. Nun weiß das Abspielgerät, daß die unverschlüsselten Daten im Anfangsabschnitt 20 des Nutzdatenblocks 14 beispielsweise im MPEG-Layer-3-Format (MP3) vorliegen, derart, daß das Abspielgerät die unverschlüsselten Multimediadaten decodieren und abspielen kann (Schritt 112). Während des Abspielens des Anfangsabschnitts 20 ist das Gerät nun in der Lage, sämtliche relativ komplizierten weiteren Daten des Anfangsabschnitts zu verarbeiten, wie z. B. die Daten im Crypt-Block 28, im Lizenz-Block 30, im Nutzdaten-Informations-Block 32, der insbesondere eine relativ aufwendige Hash-Summe/digitale Unterschrift über den Anfangsblock (Eintrag 66) umfaßt. Eine weitere aufwendige Operation besteht in der Entschlüsselung des Multimediadaten-Schlüssels aus dem Ausgabewert (Eintrag 46), um die verschlüsselten Abschnitte 16 (Fig. 1) des verschlüsselten Multimediadatenstroms entschlüsseln zu können.

Es kann wahlweise eingestellt werden, ob zu den Informationen, die zum Abspielen des unverschlüsselten Anfangsabschnitts 20 nötig sind, auch die Einträge Lieferant (Distributor) 42 und Benutzer 44 gehören sollen. In diesem Fall ist die Preview- bzw. Prelisten-Funktion lediglich für einen bestimmten Benutzer bzw. für Abonnenten eines bestimmten Distributors möglich. Somit kann ein Distributor durch die sehr einfache und nicht-aufwendige Implementation der Preview- bzw. Prelisten-Funktion einem speziellen Benutzer bzw. allen seinen abonnierten Benutzern eine verschlüsselte Multimediadatei schicken, damit der/die Benutzer "auf den Geschmack" kommt/kommen, indem er einen Bereich von z. B. 1 Sekunde bis zu 1 Minute, d. h. den unverschlüsselten Anfangsabschnitt 20 anhört bzw. ansieht, um sich dann zum Kauf des gesamten verschlüsselten Multimediadatenstroms zu entscheiden, bzw. um einzelne Stücke auf einfache Art und Weise identifizieren zu können.

In diesem Fall brauchen die Schritte 114, 116 und 118 nicht ausgeführt zu werden. Es sei darauf hingewiesen, daß dieselben in diesem Fall auch gar nicht ausgeführt werden können, da der Benutzer unter Umständen noch nicht im Besitz der Informationen ist, wie der Ausgabewert 46 entschlüsselt werden muß, um den Multimediadaten-Schlüssel zu erhalten, um die verschlüsselten Multimediadaten in den verschlüsselten Abschnitten 16 entschlüsseln zu können. Sollte sich ein Benutzer zum Kauf entschließen, nachdem er durch die Previewbzw. Prelisten-Funktion auf den Geschmack gekommen ist, so muß der Distributor lediglich den Benutzer in die Lage versetzen, den Ausgabewert zu entschlüsseln.

Das Bereitstellen eines unverschlüsselten Anfangsabschnitts im Nutzdatenblock ermöglicht daher einerseits die einfache Preview- bzw. Prelisten-Funktion und andererseits die Verwendung von Prozessoren mit begrenzten Speicher- bzw. Prozessorressourcen, ohne daß wesentliche Verzögerungen durch die Verarbeitung des gesamten Anfangsblocks in Kauf genommen werden müssen.

## Patentansprüche

1. Verfahren zum Erzeugen eines verschlüsselten Nutzdatenstroms (10), der einen Anfangsblock (12) und einen Nutzdatenblock (14) aufweist, mit folgenden Schritten:
Erzeugen (100) des Anfangsblocks (12);
**gekennzeichnet durch** folgenden Schritt:
Erzeugen (102, 104, 106) des Nutzdatenblocks (14) **durch** folgende Teilschritte:
Verwenden (102) eines ersten Teils der zu verschlüsselnden Nutzdaten als Anfangsabschnitt (20) für den Nutzdatenblock (14), wobei der Anfangsabschnitt (20) unverschlüsselt ist;
Verschlüsseln (104) eines zweiten Teils von zu verschlüsselnden Nutzdaten, die auf den ersten Teil folgen; und
Anhängen (106) der verschlüsselten Nutzdaten (16) an den unverschlüsselten Anfangsabschnitt (20).

2. Verfahren nach Anspruch 1, bei dem der Schritt des Erzeugens (100) des Anfangsblocks (12) folgenden Teilschritt aufweist:
Eintragen der Länge (26) des Anfangsabschnitts (20) in den Anfangsblock (12).

3. Verfahren nach Anspruch 1 oder 2, bei dem der zweite Teil nicht sämtliche zu verschlüsselnde Nutzdaten umfaßt, und bei dem der Schritt des Erzeugens (102, 104, 106) des Nutzdatenblocks folgenden Teilschritt aufweist:
Anhängen eines dritten Teils (18) von zu verschlüsselnden Nutzdaten, die auf den zweiten Teil folgen, an die verschlüsselten Nutzdaten (16) des zweiten Teils, wobei die Nutzdaten des dritten Teils unverschlüsselt sind.

4. Verfahren nach einem der vorhergehenden Ansprüche, bei dem der Schritt des Erzeugens (100) des Anfangsblocks (12) folgenden Teilschritt aufweist:
Eintragen der Länge (22) der verschlüsselten Multimediadaten (16), die den zu verschlüsselnden Nutzdaten des zweiten Teils entsprechen, in den Anfangsblock (12).

5. Verfahren nach Anspruch 3 oder 4, bei dem der Schritt des Erzeugens (100) des Anfangsblocks (12) ferner folgenden Teilschritt aufweist:
Eintragen der Summe (24) der Länge (22) der verschlüsselten Nutzdaten, die dem zweiten Teil entsprechen, und der Länge des dritten Teils der unverschlüsselten Nutzdaten (18) in den Anfangsblock (12).

6. Verfahren zum Abspielen eines verschlüsselten Multimediadatenstroms (10), der einen Anfangsblock (12) und einen Nutzdatenblock (14) aufweist, wobei ein Anfangsabschnitt (20) des Nutzdatenblocks (14), der auf den Anfangsblock (12) folgt, unverschlüsselte Nutzdaten aufweist, und wobei ein weiterer Abschnitt (16) des Nutzdatenblocks (14) verschlüsselte Nutzdaten aufweist, wobei der Anfangsblock (12) Informationen enthält, die zum Abspielen des Anfangsabschnitts (20) des Nutzdatenblocks (14) benötigt werden, und wobei der Anfangsblock (12) Informationen enthält, die zum Abspielen des unverschlüsselten Anfangsabschnitts (20) des Nutzdatenblocks (14) nicht benötigt werden, **gekennzeichnet durch** folgende Schritte:
Verarbeiten (110) der Informationen des Anfangsblocks (12), die zum Abspielen des Anfangsabschnitts (20) des Nutzdatenblocks (14) benötigt werden; und
Abspielen (112) des unverschlüsselten Anfangsabschnitts (20) des Nutzdatenblocks (14).

7. Verfahren nach Anspruch 6, das ferner folgende Schritte aufweist:
Verarbeiten (114) der Informationen des Anfangsblocks (12), die zum Abspielen des unverschlüsselten Anfangsabschnitts (20) nicht benötigt werden;
Entschlüsseln des weiteren Abschnitts (16) des Nutzdatenblocks (14) unter Verwendung der verarbeiteten Informationen des Anfangsblocks (12); und
Abspielen (118) der entschlüsselten Nutzdaten des weiteren Abschnitts (16) des Nutzdatenblocks (14).

8. Verfahren nach Anspruch 7, bei dem der Schritt des Verarbeitens (114) der Informationen des Anfangsblocks (12), die zum Abspielen des unverschlüsselten Anfangsabschnitts (20) nicht benötigt werden, im wesentlichen parallel zum Abspielen (112) des unverschlüsselten Anfangsabschnitts (20) durchgeführt werden.

9. Verfahren nach einem der Ansprüche 6 bis 8, bei dem die Länge (22) des unverschlüsselten Anfangsabschnitts (20) des Nutzdatenblocks (14) zwischen 1 und 60 Sekunden liegt.

10. Verfahren nach einem der Ansprüche 6 bis 9, bei dem die zu verschlüsselnden Nutzdaten codiert sind, und bei dem die Informationen, die zum Abspielen benötigt werden, einen Eintrag (72) bezüglich des Typs des Codier/Decodier-Verfahrens aufweisen.

11. Verfahren nach einem der vorhergehenden Ansprüche, bei dem die Nutzdaten Audio- und/oder Videodaten sind.

12. Vorichtung zum Erzeugen eines verschlüsselten Nutzdatenstroms (10), der einen Anfangsblock (12) und einen Nutzdatenblock (14) aufweist, mit folgenden Merkmalen:
einer Einrichtung zum Erzeugen (100) des Anfangsblocks (12); und
**gekennzeichnet durch**
eine Einrichtung zum Erzeugen (102, 104, 106) des Nutzdatenblocks (14), die folgende Merkmale aufweist:
eine Einrichtung zum Verwenden (102) eines ersten Teils der zu verschlüsselnden Nutzdaten als Anfangsabschnitt (20) für den Nutzdatenblock (14), wobei der Anfangsabschnitt (20) unverschlüsselt ist;
eine Einrichtung zum Verschlüsseln (104) eines zweiten Teils von zu verschlüsselnden Nutzdaten, die auf den ersten Teil folgen; und
eine Einrichtung zum Anhängen (106) der verschlüsselten Nutzdaten (16) an den unverschlüsselten Anfangsabschnitt (20).

13. Vorrichtung zum Abspielen eines verschlüsselten Nutzdatenstroms (10), der einen Anfangsblock (12) und einen Nutzdatenblock (14) aufweist, wobei ein Anfangsabschnitt (20) des Nutzdatenblocks (14), der auf den Anfangsblock (12) folgt, unverschlüsselte Nutzdaten aufweist, und wobei ein weiterer Abschnitt (16) des Nutzdatenblocks (14) verschlüsselte Nutzdaten aufweist, wobei der Anfangsblock (12) Informationen enthält, die zum Abspielen des Anfangsabschnitts (20) des Nutzdatenblocks (14) benötigt werden, und wobei der Anfangsblock (12) Informationen enthält, die zum Abspielen des unverschlüsselten Anfangsabschnitts (20) des Nutzdatenblocks (14) nicht benötigt werden, **gekennzeichnet durch**:
eine Einrichtung zum Verarbeiten (110) der Informationen des Anfangsblocks (12), die zum Abspielen des Anfangsabschnitts (20) des Nutzdatenblocks (14) benötigt werden; und
eine Einrichtung zum Abspielen (112) des unverschlüsselten Anfangsabschnitts (20) des Nutzdatenblocks (14).

14. Vorrichtung nach Anspruch 13, die ferner folgende Merkmale aufweist:
eine Einrichtung zum Verarbeiten (114) der Informationen des Anfangsblocks (12), die zum Abspielen des unverschlüsselten Anfangsabschnitts (20) nicht benötigt werden;
eine Einrichtung zum Entschlüsseln des weiteren Abschnitts (16) des Nutzdatenblocks (14) unter Verwendung der verarbeiteten Informationen des Anfangsblocks (12); und
eine Einrichtung zum Abspielen (118) der entschlüsselten Nutzdaten des weiteren Abschnitts (16) des Nutzdatenblocks (14).

15. Vorrichtung nach Anspruch 14, bei der die Einrichtung zum Verarbeiten (114) der Informationen des Anfangsblocks (12), die zum Abspielen des unverschlüsselten Anfangsabschnitts (20) nicht benötigt werden, angeordnet ist, um im wesentlichen parallel zur Einrichtung zum Abspielen (112) des unverschlüsselten Anfangsabschnitts (20) betrieben zu werden.

16. Vorrichtung nach Anspruch 13, die als Stereoanlage, Hifi-Gerät, Solid-State-Player, Abspielgerät mit Festplatte oder CD-ROM, oder Computer ausgeführt ist.

17. Vorrichtung nach einem der Ansprüche 12 bis 16, bei der die Nutzdaten Audio- und/oder Videodaten sind.

## Claims

1. A method for generating an encrypted user data stream (10), which has a start block (12) and a user data block (14), comprising the following steps:
generating (100) the start block (12); and
generating (102, 104, 106) the user data block (14) by means of the following substeps:
using (102) a first part of the user data to be encrypted as start section (20) for the user data block (14), the start section (20) being unencrypted;
encrypting (104) a second part of user data to be encrypted which follow the first part; and
appending (106) the encrypted user data (16) to the unencrypted start section (20).

2. A method according to claim 1, wherein the step of generating (100) the start block (12) includes the following substep:
entering the length (26) of the start section (20) in the start block (12).

3. A method according to claim 1 or 2, wherein the second part does not comprise all the user data to be encrypted and wherein the step of generating (102, 104, 106) the user data block includes the following substep:
appending a third part (18) of user data to be encrypted, which follow the second part, to the encrypted user data (16) of the second part, the user data of the third part being unencrypted.

4. A method according to one of the preceding claims, wherein the step of generating (100) the start block (12) includes the following substep:
entering the length (22) of the encrypted multimedia data (16), which correspond to the user data of the second part which are to be encrypted, in the start block (12).

5. A method according to claim 3 or 4, wherein the step of generating (100) the start block (12) also includes the following substep:
entering the sum (24) of the length (22) of the encrypted user data, which correspond to the second part, and the length of the third part of the unencrypted user data (18) in the start block (12).

6. A method for playing back an encrypted multimedia data stream (10), which has a start block (12) and a user data block (14), where a start section (20) of the user data block (14), which follows the start block (12), contains unencrypted user data and where a further section (16) of the user data block (14) contains encrypted user data, where the start block (12) contains information which is needed to play back the start section (20) of the user data block (14) and where the start block (12) contains information which is not needed to play back the unencrypted start section (20) of the user data block (14), comprising the following steps:
processing (110) the information of the start block (12) which is needed to play back the start section (20) of the user data block (14); and
playing back (112) the unencrypted start section (20) of the user data block (14).

7. A method according to claim 6, which also includes the following steps:
processing (114) the information of the start block (12) which is not needed to play back the unencrypted start section (20);
decrypting the further section (16) of the user data block (14) using the processed information of the start block (12); and
playing back (118) the encrypted user data of the further section (16) of the user data block (14).

8. A method according to claim 7, wherein the step of processing (114) the information of the start block (12) which is not needed to play back the unencrypted start section (20) is performed essentially concurrently with the playing back (112) of the unencrypted start section (20).

9. A method according to one of the claims 6 to 8, wherein the length (22) of the unencrypted start section (20) of the user data block (14) is between 1 and 60 seconds.

10. A method according to one of the claims 6 to 9, wherein the user data to be encrypted are coded and wherein the information which is needed for playing back contains an entry (72) specifying the type of coding/decoding method.

11. A method according to one of the preceding claims, wherein the user data are audio and/or video data.

12. A device for generating an encrypted user data stream (10), which has a start block (12) and a user data block (14), comprising:
a unit for generating (100) the start block (12); and
a unit for generating (102, 104, 106) the user data block (14), with the following features:
a unit for using (102) a first part of the user data to be encrypted as start section (20) for the user data block (14), the start section (20) being unencrypted;
a unit for encrypting (104) a second part of user data to be encrypted which follow the first part; and
a unit for appending (106) the encrypted user data (16) to the unencrypted start section (20).

13. A device for playing back an encrypted user data stream (10), which has a start block (12) and a user data block (14), where a start section (20) of the user data block (14), which follows the start block (12), contains unencrypted user data and where a further section (16) of the user data block (14) contains encrypted user data, where the start block (12) contains information which is needed to play back the start section (20) of the user data block (14) and where the start block (12) contains information which is not needed to play back the unencrypted start section (20) of the user data block (14), comprising:
a unit for processing (110) the information of the start block (12) which is needed to play back the start section (20) of the user data block (14); and
a unit for playing back (112) the unencrypted start section (20) of the user data block (14).

14. A device according to claim 13, which further comprises:
a unit for processing (114) the information of the start block (12) which is not needed to play back the unencrypted start section (20);
a unit for decrypting the further section (16) of the user data block (14) using the processed information of the start block (12); and
a unit for playing back (118) the encrypted user data of the further section (16) of the user data block (14).

15. A device according to claim 14, wherein the unit for processing (114) the information of the start block (12) which is not needed to play back the unencrypted start section (20) is designed to be operated essentially concurrently to the unit for playing back (112) the unencrypted start section (20).

16. A device according to claim 13 which is implemented as a stereo system, hifi unit, solid state player, a playback unit with a hard disk or CD ROM, or a computer.

17. A device according to one of the claims 12 to 16, wherein the user data are audio and/or video data.

## Revendications

1. Procédé pour générer un flux de données utiles crypté (10) présentant un bloc initial (12) et un bloc de données utiles (14), aux étapes suivantes consistant à :
générer (100) le bloc initial (12) ;
**caractérisé par** l'étape suivante consistant à :
générer (102, 104, 106) le bloc de données utiles (14) par les étapes partielles suivantes consistant à :
utiliser (102) une première partie des données utiles à crypter comme segment initial (20) du bloc de données utiles (14), le segment initial (20) étant non crypté ;
crypter (104) une seconde partie de données utiles à crypter suivant la première partie ; et
accrocher (106) les données utiles cryptées (16) au segment initial (20) non crypté.

2. Procédé selon la revendication 1, dans lequel l'étape de génération (100) du bloc initial (12) présente l'étape partielle suivante consistant à :
entrer la longueur (26) du segment initial (20) dans le bloc initial (12).

3. Procédé selon la revendication 1 ou 2, dans lequel la seconde partie ne comporte pas toutes les données utiles à crypter et dans lequel l'étape de génération (102, 104, 106) du bloc de données utiles présente l'étape partielle suivante consistant à:
accrocher une troisième partie (18) de données utiles à crypter suivant la seconde partie aux (20) données utiles cryptées (16) de la seconde partie, les données utiles de la troisième partie étant non cryptées.

4. Procédé selon l'une des revendications précédentes, dans lequel l'étape de génération (100) du bloc initial (12) présente l'étape partielle suivante consistant à :
entrer la longueur (22) des données multimédia cryptées (16) correspondant aux données utiles à crypter de la seconde partie dans le bloc initial (12).

5. Procédé selon la revendication 3 ou 4, dans lequel l'étape de génération (100) du bloc initial (12) présente, par ailleurs, l'étape partielle suivante consistant à :
entrer la somme (12) de la longueur (22) des données utiles cryptées correspondant à la seconde partie et de la longueur de la troisième partie des données utiles non cryptées (18) dans le bloc initial (12).

6. Procédé pour reproduire un flux de données multimédia crypté (10) présentant un bloc initial (12) et un bloc de données utiles (14), un segment initial (20) du bloc de données utiles (14) suivant le bloc initial (12) présentant des données utiles non cryptées et un autre segment (16) du bloc de données utiles (14) présentant des données utiles cryptées, le bloc initial (12) contenant des informations qui sont nécessaires pour la reproduction du segment initial (20) du bloc de données utiles (14) et le bloc initial (12) contenant des informations qui ne sont pas nécessaires pour la reproduction du segment initial non crypté (20) du bloc de données utiles (14), **caractérisé par** les étapes suivantes consistant à :
traiter (110) les informations du bloc initial (12) qui sont nécessaires pour la reproduction du segment initial (20) du bloc de données utiles (14) ; et
reproduire (112) le segment initial non crypté (20) du bloc de données utiles (14).

7. Procédé selon la revendication 6, présentant, par ailleurs, les étapes suivantes consistant à :
traiter (114) les informations du bloc initial (12) qui ne sont pas nécessaires pour la reproduction du segment initial non crypté (20) ;
décrypter l'autre segment (16) du bloc de données utiles (14) en utilisant les informations traitées du bloc initial (12) ; et
reproduire (118) les données utiles décryptées de l'autre segment (16) du bloc de données utiles (14).

8. Procédé selon la revendication 7, dans lequel l'étape de traitement (114) des informations du bloc initial (12) qui ne sont pas nécessaires pour la reproduction du segment initial non crypté (20) est réalisée sensiblement en parallèle avec la reproduction (112) du segment initial non crypté (20).

9. Procédé selon l'une des revendications 6 à 8, dans lequel la longueur (22) du segment initial non crypté (20) du bloc de données utiles (14) est comprise entre 1 et 60 secondes.

10. Procédé selon l'une des revendications 6 à 9, dans lequel les données utiles à crypter sont codées et dans lequel les informations qui sont nécessaires pour la reproduction présentent une entrée (72) en ce qui concerne le type de procédé de codage/décodage.

11. Procédé selon l'une des revendications précédentes, dans lequel les données utiles sont des données audio et/ou vidéo.

12. Dispositif pour générer un flux de données utiles crypté (10) présentant un bloc initial (12) et un bloc de données utiles (14), aux caractéristiques suivantes :
un dispositif pour générer (100) le bloc initial (12) ; et
**caractérisé par** :
un dispositif pour générer (102, 104, 106) le bloc de données utiles (14) présentant les caractéristiques suivantes :
un dispositif pour utiliser (102) une première partie des données utiles à crypter comme segment initial (20) du bloc de données utiles (14), le segment initial (20) étant non crypté ;
un dispositif pour crypter (104) une seconde partie de données utiles à crypter suivant la première partie ; et
un dispositif pour accrocher (106) les données utiles cryptées (16) au segment initial (20) non crypté.

13. Dispositif pour reproduire un flux de données utiles crypté (10) présentant un bloc initial (12) et un bloc de données utiles (14), un segment initial (20) du bloc de données utiles (14) suivant le bloc initial (12) présentant des données utiles non cryptées et un autre segment (16) du bloc de données utiles (14) présentant des données utiles cryptées, le bloc initial (12) contenant des informations qui sont nécessaires pour la reproduction du segment initial (20) du bloc de données utiles (14) et le bloc initial (12) contenant des informations qui ne sont pas nécessaires pour la reproduction du segment initial non crypté (20) du bloc de données utiles (14), **caractérisé par** :
un dispositif pour traiter (110) les informations du bloc initial (12) qui sont nécessaires pour la reproduction du segment initial (20) du bloc de données utiles (14) ; et
un dispositif pour reproduire (112) le segment initial non crypté (20) du bloc de données utiles (14).

14. Dispositif selon la revendication 13, présentant, par ailleurs, les caractéristiques suivantes :
un dispositif pour traiter (114) les informations du bloc initial (12) qui ne sont pas nécessaires pour la reproduction du segment initial non crypté (20) ;
un dispositif pour décrypter l'autre segment (16) du bloc de données utiles (14) en utilisant les informations traitées du bloc initial (12) ; et
un dispositif pour reproduire (118) les données utiles décryptées de l'autre segment (16) du bloc de données utiles (14).

15. Dispositif selon la revendication 14, dans lequel le dispositif pour traiter (114) les informations du bloc initial (12) qui ne sont pas nécessaires pour la reproduction du segment initial non crypté (20) est disposé de manière à fonctionner sensiblement en parallèle avec le dispositif pour reproduire (112) le segment initial non crypté (20).

16. Dispositif selon la revendication 13, réalisé sous forme d'installation stéréo, d'appareil Hi-Fi, de reproducteur monobloc, d'appareil de reproduction à disque dur ou à CD-ROM, ou d'ordinateur.

17. Dispositif selon l'une des revendications 12 à 16, dans lequel les données utiles sont des données audio et/ou vidéo.
